# EUROPÄISCHE PATENTSCHRIFT

(11) **EP 3 415 547 B1**
(45) Veröffentlichungstag und Bekanntmachung des Hinweises auf die Patenterteilung: **25.03.2020**
(21) Anmeldenummer: 17175693.5
(22) Anmeldetag: 13.06.2017
(51) Int. Cl.: C08G 77/12, C08G 77/46, C08L 83/04, C08L 83/12

(54) **VERFAHREN ZUR HERSTELLUNG SIC-VERKNÜPFTER POLYETHERSILOXANE**
METHOD FOR PRODUCING SIC-LINKED POLYETHER SILOXANES
PROCÉDÉ DE FABRICATION DE POLYÉTHERSILOXANES LIÉS PAR SIC

(43) Veröffentlichungstag der Anmeldung: 19.12.2018
(73) Patentinhaber: Evonik Operations GmbH, 45128 Essen (DE)
(72) Erfinder: Knott, Wilfried, 45355 Essen (DE); Windbiel, Dagmar, 45289 Essen (DE)
(74) Vertreter: Evonik Patent Association

(56) Entgegenhaltungen:
- EP-A2- 0 314 903
- EP-A2- 0 885 932
- WO-A2-2008/132236
- US-A- 5 668 212

## Beschreibung

Die Erfindung liegt auf dem Gebiet der Organopolysiloxane und betrifft ein Verfahren zur Herstellung SiC-verknüpfter Polyethersiloxane. Insbesondere betrifft die Erfindung ein Verfahren zur Herstellung SiC-verknüpfter Polyethersiloxane durch eine Hydrosilylierungsreaktion zwischen einem SiH-Gruppen aufweisenden Siloxan und einem olefinisch ungesättigten Polyether.

Die Herstellung organisch modifizierter Organopolysiloxane durch eine Hydrosilylierungsreaktion von einem flüssigem Organopolysiloxan, das mindestens eine Siliciumwasserstoffgruppe pro Molekül besitzt mit einer nicht Silicon enthaltenden, flüssigen organischen Verbindung, die mindestens eine olefinische Kohlenstoff-Kohlenstoff-Doppelbindung in jedem Molekül enthält, ist bekannt.

SiC-verknüpfte, organomodifizierte Siloxane, speziell Polyethersiloxane, stellen mit ihrem weit einstellbaren Tensidverhalten eine industriell sehr wichtige Stoffklasse dar. Der etablierte Weg zur Herstellung dieser Substanzen liegt in der Platinmetall-katalysierten Anlagerung SiH-Gruppen tragender Siloxane und Silane an olefinisch funktionalisierte Verbindungen, wie z.B. an Allylpolyether.

Die Verwendung von Platinkatalysatoren für die Anlagerung von Silanen oder Siloxanen mit SiH-Gruppen an Verbindungen mit einer oder mehreren olefinischen Doppelbindungen ist bekannt (Hydrosilylierung) und z.B. in dem von Michael. A. Brook verfassten Buch "Silicon in Organic, Organometallic, and Polymer Chemistry", Verlag John Wiley & Sons, Inc., New York 2000, Seite 403 ff. , und in der Patentliteratur, z.B. in der DE-A-26 46 726 , der EP-A-0 075 703 und der US-A-3 775 452 , beschrieben. In der heutigen betrieblichen Praxis haben sich überwiegend Hexachloroplatinsäure und cis-Diamminoplatin(II)chlorid durchgesetzt.

Obwohl sich dieses Reaktionsprinzip in der Theorie scheinbar einfach beschreiben lässt, ist die reproduzierbare Durchführung im industriellen Maßstab sehr diffizil.

Der Phaseninkompatibilität der Reaktanden (SiH-Gruppen tragendes Organopolysiloxan und eine olefinische Kohlenstoff-Kohlenstoff-Doppelbindung in jedem Molekül enthaltende organische Verbindung) geschuldet, starten die lösungsmittelfrei geführten Hydrosilylierungsreaktionen aus einer Zweiphasigkeit. Das gilt insbesondere für die Herstellung SiC-verknüpfter Polyethersiloxane. Ohne Eintrag erheblicher Scherenergie neigen die Reaktionsansätze ohne Lösungsmittel typischer Weise zur Separation ihrer Reaktandphasen.

Als Konsequenz der beobachteten Inkompatibilität der Reaktandphasen laufen die lösungsmittelfrei geführten Hydrosilylierungsreaktionen oft sehr langsam, manchmal sogar unvollständig ab, beeinträchtigen dadurch die in der Produktion erzielbare Raum-Zeit-Ausbeute und mindern in einigen Fällen auch die erreichbare Produktqualität.

Die Phaseninkompatibilität zwischen den Reaktanden ist umso ausgeprägter, je hydrophiler der anzulagernde ungesättigte Polyether ist. Dieser Befund gilt daher insbesondere für Polyether, die einen hohen Anteil von Ethylenoxid in ihrer molekularen Struktur aufweisen.

Die anwendungstechnische Brauchbarkeit von Produkten, die aus der Platinmetall-katalysierten Anlagerungsreaktion von SiH-Gruppen tragenden Siloxanen an olefinische Doppelbindungen aufweisende Verbindungen hervorgehen, ist insbesondere direkt verknüpft mit dem erzielten Umsatz in der Hydrosilylierung, das heißt, der Minimierung von restlichen SiH-Funktionen. Rest-SiH führt insbesondere in Gegenwart ubiquitärer Wasserspuren (z.B. Luftfeuchtigkeit) zu unkontrollierbaren Hydrolyse- und Vernetzungsprozessen, die speziell im Falle von Anlagerungsverbindungen hohen Molekulargewichts zwingend zur Vergelung führen und die Produkte unbrauchbar machen.

Andererseits erkauft man sich bei der Verwendung von Reaktandphasenkompatibilisierung erzeugenden Lösungsmitteln, wie zum Beispiel beim Einsatz der für die Hydrosilylierungsreaktion geeigneten aromatischen Lösungsmittel Benzol, Toluol oder der isomeren Xylole auch den Nachteil einer zum Teil erheblich verringerten Raum-Zeit-Ausbeute, da ein Teil des Reaktorvolumens vom Hilfslösemittel beansprucht wird. Zudem entsteht die Notwendigkeit, das Lösungsmittel nach beendeter Reaktion destillativ und vollständig zu entfernen.

Im Umfeld eines speziell organomodifizierte Siloxane herstellenden Produktionsbetriebes ist die organische Hilfsphase stets eine lästige Fremdphase, die es gilt, aufwendig abzutrennen, mehr oder minder aufwendig zu reinigen und später wieder in den Gesamtprozess zurückzuführen. Der Gewährleistung nicht querkontaminierter Stoffströme kommt neben Aspekten der sicheren Lagerung, Handhabung und Entsorgung dabei eine besondere Bedeutung zu.

Demzufolge besteht eine grundsätzliche technische Herausforderung darin, einen Herstellprozess zu finden, der auf den Einsatz systemfremder Lösemittel verzichten kann.

Die US2004/198905 beschäftigt sich mit diesem allgemeinen Problem einer aus der Zweiphasigkeit startenden Hydrosilylierungsreaktion und beansprucht ein lösungsmittelfreies Verfahren zur Herstellung von organisch modifizierten Organopolysiloxanen, umfassend eine Hydrosilylierungsreaktion, bei der man ein flüssiges Organopolysiloxan (A), das mindestens ein an ein Siliciumatom gebundenes Wasserstoffatom in jedem Molekül enthält, mit einer nicht Silizium enthaltenden, flüssigen organischen Verbindung (B), die in jedem Molekül mindestens eine olefinische Kohlenstoff-Kohlenstoff-Doppelbindung enthält, in Gegenwart von einem Katalysator (C) für die Hydrosilylierungsreaktion zur Umsetzung bringt, in dem man die Hydrosilylierungsreaktion in einer Dispersion durchführt, bei der die Komponente (B) in der Komponente (A) oder die Komponente (A) in der Komponente (B) jeweils in einer mikroverteilten Form mit einer mittleren Teilchengröße ≤ 100 µm vorliegen, herbeigeführt durch das durch Eintrag hoher Scherenergie erfolgende Rühren der Komponenten (A) und (B).

Die Lehre der US2004/198905 verlangt, dass die Komponenten (A) und (B) einer hochenergetischen Scherung ausgesetzt werden, um zu gewährleisten, dass die jeweiligen Dispersionen der Reaktandkomponenten ((B) dispergiert in (A) oder aber (A) dispergiert in (B)) nur von feinverteilten Tröpfchen durchsetzt sind, deren mittlere Teilchengrößen ≤ 100 µm betragen. Gemäß US2004/198905 hängt die Durchführung der Hydrosilylierungsreaktionen direkt von dem Erzielen dieser Tröpfchengeometrie ab.

Als bevorzugte Apparate zur Erzeugung der hochenergetischen Scherung und des angestrebten Dispergiereffektes sind dort Kolloidmühlen, Homomischer und Inline-Mischer genannt. In den Ausführungsbeispielen kommen ein ULTRA-TURRAX sowie ein rotierender Scheibenmischer zum Einsatz.

Gerade dieser apparative Aufwand gereicht dem Hydrosilylierungsverfahren der US2004/198905 zum Nachteil. Die angesprochenen hochenergetischen Dispergiermaschinen sind teuer in ihrer Anschaffung sowie im Betrieb und aufgrund ihres Verschleißes auch kostspielig im Unterhalt. Darüber hinaus kann man sie nicht ohne weiteres in existierende Betriebsanlagen, die zumeist mit Standardrührern ausgestattet sind, integrieren.

In explosionsgefährdeten Produktionsbereichen, wie zum Beispiel in Betrieben zur Herstellung organomodifizierter Organopolysiloxane, ist bei der Installation von hochenergetischen Dispergiermaschinen ein erheblicher Sicherheitsaufwand zu treiben. Im Gegensatz zu Standardrührern geht von diesen mit hoher Geschwindigkeit arbeitenden Apparaten stets die Gefahr des an ihren metallischen Teilen (Rotor/ Stator) durch Friktion erzeugten Funkenschlags aus.

Ein weiteres Handicap der in der US2004/198905 offenbarten Lehre liegt in der Verwendung unrealistisch hoher Einsatzmengen teuren Platinkatalysators. Alle dort aufgeführten Beispiele ressortieren auf Platinmengen von 80 Gewichts-ppm (wppm) bezogen auf den Gesamtansatz. Praxisrelevanz besitzen allerdings solche überbordenden Katalysen weder im Hinblick auf die Kosten noch im Hinblick auf die Qualitätsdefizite, die ein derartig hergestelltes organomodifiziertes Polyorganosiloxan hinsichtlich Verfärbung, Geruch und Viskosität erfährt. Über diese wichtigen Produkteigenschaften schweigt die Schrift jedoch.

In Sicht der US2004/198905 gilt es, ein effizientes Verfahren zur Herstellung organisch modifizierter Organopolysiloxane durch eine Hydrosilylierungsreaktion zu finden, das auf den Einsatz hochenergetischer Dispergiermaschinen und unverhältnismäßig hoher Platinmengen verzichten kann und dennoch eine zügige SiC-Verknüpfungsreaktion gewährleistet und ebenfalls ein lösungsmittelfreies Arbeiten ermöglicht. WO2008/132236 offenbart ein ähnliches Verfahren, wobei ein Polyethersiloxan ist erst herstellt, und dann fügt man Siloxan zu.

Im Rahmen der vorliegenden Erfindung wurde nun überraschenderweise ein sehr effizientes lösungsmittelfreies Verfahren zur Herstellung organisch modifizierter Organopolysiloxane durch eine Hydrosilylierungsreaktion zwischen einem Organopolysiloxan, das mindestens eine Siliciumwasserstoffgruppe pro Molekül besitzt und einem olefinisch ungesättigten Polyether, gefunden.

Gegenstand der Erfindung ist ein Verfahren zur Herstellung SiC-verknüpfter Polyethersiloxane durch Edelmetall-katalysierte Anlagerung von olefinisch ungesättigten Polyethern an SiH-Gruppen aufweisende Siloxane, gemäss Anspruch 1.

Das einzusetzende SiH-Gruppen aufweisende Siloxan und der olefinisch ungesättigte Polyether sind vorzugsweise bei Raumtemperatur (20°C) flüssig.

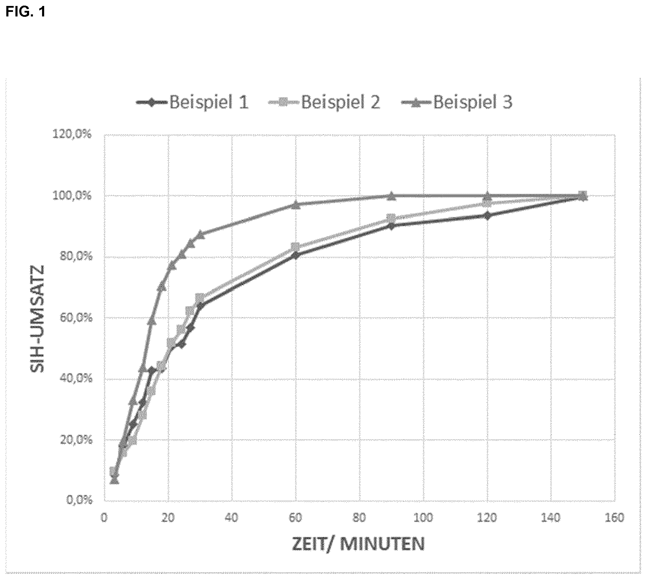

Die Abbildung Fig. 1 zeigt das Umsatz-Zeitverhalten der SiC-Verknüpfungsreaktion. Auf der Ordinate ist der gasvolumetrisch bestimmte SiH-Umsatz in Prozent und auf der Abszisse die Reaktionszeit in Minuten aufgetragen. Der das erfindungsgemäße Verfahren kennzeichnende Kurvenverlauf (Beispiel 3) zeigt die mit dem erfindungsgemäßen Verfahren einhergehende Prozessverbesserung. Die Kurvenverläufe der nichterfindungsgemäßen Beispiele 1 und 2 weisen in der exothermen Anfangsphase eine viel geringere Steigung auf, demgegenüber weist das erfindungsgemäße Beispiel bereits nach kurzer Zeit einen deutlich höheren SiH-Umsatz auf.

Im Rahmen des erfindungsgemäßen Verfahrens wurde gefunden, dass bereits das Vermischen einer kleinen Menge eines Polyethersiloxans mit dem SiH-Gruppen aufweisenden Siloxan vor der Reaktion ausreichend ist, um eine sehr effektive Reaktionsbeschleunigung der angestrebten SiC-Verknüpfungsreaktion zu bewirken.

Die hinzugefügte Menge an Polyethersiloxan liegt vorzugsweise im Bereich von 2 bis 10 Gew.-% bezogen auf die Gesamtmasse der Reaktanden, bevorzugt im Bereich von 2 bis 6 Gew.-%. In der Regel zeigen einige orientierende Vorversuche dem Fachmann, welche Einsatzmenge am zweckmäßigsten ist.

Zur Erzielung der Reaktionsbeschleunigung kann prinzipiell eine Vielzahl von Polyethersiloxanen eingesetzt werden. Bevorzugt werden jedoch unter den Gesichtspunkten der Systemverträglichkeit und der späteren Anwendung hierbei Polyethersiloxane eingesetzt, deren chemische Struktur derjenigen des über die Hydrosilylierungsreaktion angestrebten Polyethersiloxans ähnelt oder nahe kommt.

Somit wählt man zur Dispergierung des SiH-Gruppen aufweisenden Siloxans erfindungsgemäß besonders bevorzugt das Polyethersiloxan aus, das strukturell demjenigen Polyethersiloxan entspricht, das aus der SiC-verknüpfenden Anlagerung des olefinisch ungesättigten Polyethers an das SiH-Gruppen aufweisende Siloxan hervorgeht.

Auch hier setzt sich das erfindungsgemäße Verfahren von der Lehre der US2004/198905 ab, der man nicht entlehnen kann, welche Dispersion der Reaktandkomponenten ((B) dispergiert in (A) oder aber (A) dispergiert in (B)) eine bevorzugte Reaktionsführung gestattet.

In diesem Zusammenhang unterstreicht das Vergleichsexperiment (Beispiel 2) die Unwirksamkeit eines Vorgehens, bei dem man in einem ersten Schritt die nicht Silicon enthaltende, flüssige organische Verbindung (Polyether) zusammen mit einem Polyethersiloxan unter Rühren vermischt und dann in einem zweiten Schritt diese Vormischung unter Rühren mit einem SiH-Gruppen aufweisenden Siloxan und mit einem Edelmetallkatalysator beaufschlagt. Verglichen mit dem im selben Stoffsystem durchgeführten erfindungsgemäßen Verfahren ist das beobachtete Umsatz-Zeit-Verhalten deutlich verzögert und ähnelt im Wesentlichen dem Umsatz-Zeit-Verhalten des im nichterfindungsgemäßen Beispiel 1 ausgeführten Eintopfsystems, bei dem SiH-Gruppen aufweisendes Siloxan und Polyether gemeinsam unter Rühren auf Reaktionstemperatur erhitzt und dann mit Edelmetallkatalysator beaufschlagt werden.

Wie effektiv das erfindungsgemäß beanspruchte Verfahren selbst bei Hydrosilylierungen verläuft, deren Einsatzmenge an Platin aus betriebswirtschaftlichen Gründen schon in die Nähe einer gerade noch wirksamen unteren Grenzkonzentration optimiert wurde, belegt Beispiel 3.

Die nach dem erfindungsgemäßen Verfahren eingesetzten SiH-Gruppen aufweisenden Siloxane, sind vorzugsweise solche, die einer der Formeln (I) bis (V) entsprechen: 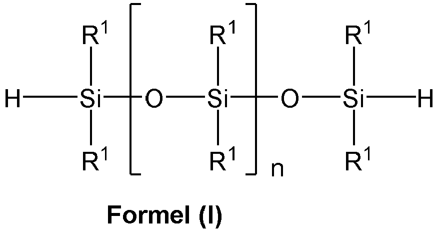
mit R¹, gleich oder verschieden: Alkyl- und/oder Aralkyl- und/oder aromatischer Rest, jeweils umfassend 1 bis 10 C-Atome,
und mit 1 ≤ n ≤ 250,

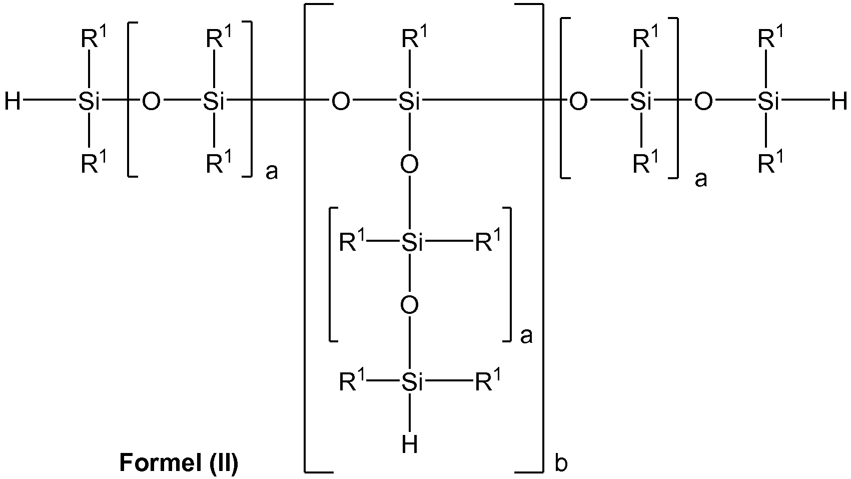

mit R¹, gleich oder verschieden: Alkyl- und/oder Aralkyl- und/oder aromatischer Rest, jeweils umfassend 1 bis 10 C-Atome
und mit a, gleich oder verschieden: 1 ≤ a ≤ 60 und
mit 0 < b ≤ 10,

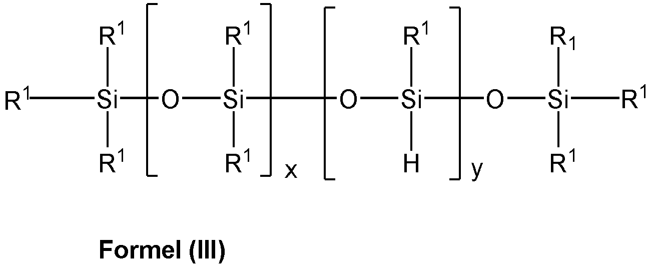

mit R¹, gleich oder verschieden: Alkyl- und/ oder Aralkyl- und / oder aromatischer Rest, jeweils umfassend 1 bis 10 C-Atome
mit 0 ≤ x ≤ 250 und
mit 1 ≤ y ≤ 50,

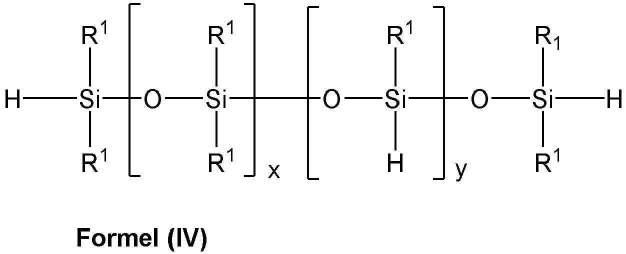

mit R¹, gleich oder verschieden: Alkyl- und/ oder Aralkyl- und / oder aromatischer Rest, jeweils umfassend 1 bis 10 C-Atome,
mit 0 ≤ x ≤ 250 und
1 ≤ y ≤ 50,

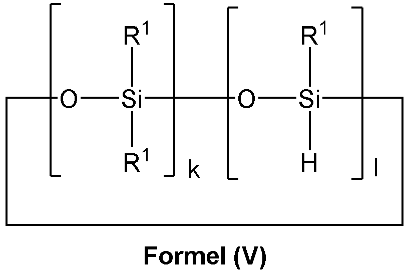

mit R¹, gleich oder verschieden: Alkyl- und/ oder Aralkyl- und / oder aromatischer Rest, jeweils umfassend 1 bis 10 C-Atome,
und mit 4 ≤ (k + l) ≤ 5 und
l ≥ 1.

Vorzugsweise steht der in den Formeln (I) bis (V) angegebene Rest R¹ für eine Methylgruppe.

Bevorzugte olefinisch ungesättigte Polyether zur Durchführung des erfindungsgemäßen Verfahrens sind diejenigen, die der Formel (VI) entsprechen:

A[-O-(CH₂-CHR-O-)ₘ-(CH₂-CH₂-O-)ₙ--(CH₂-CH(CH₃)-O-)ₒ-Z]ₐ (VI),

hierin ist
A ein olefinisch ungesättigter, mindestens zwei Kohlenstoffatome, bevorzugt mindestens drei Kohlenstoffatome aufweisender organischer Rest einer organischen Startverbindung zur Bereitung des Polyethers,
R unabhängig voneinander eine gesättigte Alkylgruppe mit 2-18 C-Atomen oder ein aromatischer Rest, respektive bevorzugt eine Ethylgruppe oder ein Phenylrest,
Z entweder Wasserstoff,
ein linearer oder verzweigter, gesättigter oder ungesättigter Kohlenwasserstoffrest mit 1-18 C-Atomen bevorzugt eine Methyl-, Ethyl-, Propyl-, Butyl-, Vinyl-, Allyl-, Methallylgruppe oder
der Rest einer organischen Säure der Formel -C(=O)-Z_{E}, wobei Z_{E} ein organischer Rest, bevorzugt ein linearer oder verzweigter, gesättigter oder ungesättigter Kohlenwasserstoffrest mit 1 bis 17 C-Atomen, bevorzugt eine Methylgruppe ist, oder ein aromatischer Kohlenwasserstoffrest mit 6 bis 20 C-Atomen, bevorzugt ein Phenylrest ist, oder
der Rest der Formel -C(=O)-O-Z_{C} ist, wobei Zc ein organischer Rest, bevorzugt ein linearer oder verzweigter, gesättigter oder ungesättigter Kohlenwasserstoffrest mit 1 bis 18 C-Atomen, bevorzugt eine Methyl-, Ethylgruppe ist, oder ein aromatischer Kohlenwasserstoffrest mit 6 bis 20 C-Atomen, bevorzugt ein Phenylrest,
m gleich 0 bis zu 50, bevorzugt 0 bis zu 30, besonders bevorzugt 0 bis zu 20 ist
n gleich 0 bis zu 250, bevorzugt 3 bis zu 220, besonders bevorzugt 5 bis zu 200 ist
o gleich 0 bis zu 250, bevorzugt 3 bis zu 220, besonders bevorzugt 5 bis zu 200 ist
a gleich 1 bis zu 8, bevorzugt größer 1 bis zu 6, besonders bevorzugt 1, 2, 3 oder 4.
mit der Maßgabe, dass die Summe aus m, n und o gleich oder größer als 1 ist.

Die hier wiedergegebenen Indexzahlen und die Wertbereiche der angegebenen Indizes können als Mittelwerte (Gewichtsmittel) der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (VI).

Die mit m, n und o bezeichneten Einheiten können wahlweise statistisch gemischt oder auch blockweise in der Kette enthalten sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Unter dem Rest A werden im Rahmen der vorliegenden Erfindung Reste von Substanzen verstanden, die den Anfang des herzustellenden olefinisch ungesättigten Polyethers oder olefinisch ungesättigten Alkoxylierungsproduktes bilden, das durch die Anlagerung von Alkylenoxiden erhalten wird. Die Startverbindung ist vorzugsweise ausgewählt aus der Gruppe der olefinisch ungesättigten Alkohole und Polyetherole. Bevorzugt wird als Startverbindung enthaltend die Gruppe A ein einwertiger olefinisch ungesättigter Polyetheralkohol und/oder ein einwertiger olefinisch ungesättigter Alkohol, oder deren beliebige Mischungen verwendet. Für den Fall, dass mehrere Startverbindungen A als Gemisch verwendet wurden, kann der Index a auch einer statistischen Verteilung unterliegen. Z kann darüber hinaus auch der Rest einer Startverbindung Z-OH sein.

Als Monomere in der Alkoxylierungsreaktion werden bevorzugt Ethylenoxid, Propylenoxid, Butylenoxid und/oder Styroloxid eingesetzt sowie beliebige Mischungen dieser Epoxide. Die unterschiedlichen Monomere können in reiner Form oder gemischt eingesetzt werden. Auch kann die Dosierung eines weiteren Epoxides zu einem bereits in der Reaktionsmischung vorliegenden Epoxides kontinuierlich über die Zeit erfolgen, so dass ein zunehmender Konzentrationsgradient des kontinuierlich zugegebenen Epoxides entsteht. Die entstehenden Polyether unterliegen damit einer statistischen Verteilung im Endprodukt, wobei Beschränkungen durch die Dosierung bestimmt werden können. Im hier genannten Fall der kontinuierlichen Zugabe eines weiteren Epoxides zu einem bereits in der Reaktionsmischung vorliegenden Epoxides ist dann über die Kettenlänge ein Strukturgradient zu erwarten. Die Zusammenhänge zwischen Dosierung und Produktstruktur sind dem Fachmann bekannt.

Besonders bevorzugt sind die Polyether der Formel (VI) die eine gewichtsmittlere Molmasse von 76 bis 10.000 g/mol, bevorzugt von 100 bis 8.000 g/mol und besonders bevorzugt von 200 bis 6.000 g/mol aufweisen.

Bevorzugt sind jedoch die Reste A solche, die aus Verbindungen der Formel (II) hervorgegangen sind:

A[-OH]a (II)

wobei a gleich 1 ist.

Als Startverbindung für die Alkoxylierungsreaktion können vorzugsweise alle Verbindungen der Formel (II)

A[-OH]a (II)

verwendet werden. Die Verbindungen der Formel (II) weisen mindestens eine Hydroxylgruppe und A = olefinisch ungesättigter, organischen Rest auf (wie oben definiert). Der olefinisch ungesättige, organische Rest weist mindestens zwei Kohlenstoffatome, bevorzugt mindestens drei Kohlenstoffatome auf. Unter Startverbindungen werden im Rahmen der vorliegenden Erfindung Substanzen verstanden, die den Anfang (Start) des herzustellenden Polyethers oder Alkoxylierungsproduktes bilden, das durch die Anlagerung von Alkylenoxiden erhalten wird. Die Startverbindung ist vorzugsweise ausgewählt aus der Gruppe der olefininisch ungesättigten Alkohole oder Polyetherole. Bevorzugt wird als Startverbindung enthaltend die Gruppe A ein einwertiger olefinisch ungesättiger Polyetheralkohol und/oder ein einwertiger olefinisch ungesättiger Alkohol, oder deren beliebige Mischungen verwendet.

Besonders bevorzugt sind die Reste, die sich von Allylalkohol, 1-Hexenol, Methallylalkohol, Vinylalkohol und Vinyloxybutanol, ableiten.

Im Rahmen dieser Erfindung umfasst der Begriff Polyether eine breite Menge an Verbindungen, sowohl Polyether, Polyetherole, Polyetheralkohole, Polyetherester als auch Polyethercarbonate, die gegebenenfalls synonym zueinander verwendet werden. Dabei ist nicht erforderlich, dass der Ausdruck "Poly" damit einhergehen muss, dass es sich um eine Vielzahl von Etherfunktionalitäten oder Alkoholfunktionalitäten im Molekül oder Polymer handelt. Vielmehr wird dadurch nur angedeutet, dass zumindest Wiederholungseinheiten einzelner Monomerbausteine oder aber Zusammensetzungen vorliegen, die eine höhere Molmasse und zudem auch noch eine gewisse Polydispersität aufweisen. Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Im Rahmen der erfindungsgemäßen Lehre sind die zu verwendenden ungesättigten Polyether vorzugsweise Ethylenoxid- und Propylenoxid-Derivate der genannten ungesättigten Alkohole und umfassen neben den nur von Ethylenoxid (EO)- bzw. nur von Propylenoxid (PO)-abgeleiteten Homopolymer-Strukturen auch alle zugänglichen EO-/PO-Mischderivate.

Vorzugsweise werden niedermolekulare Polyetherole mit 1 Hydroxylgruppe und gewichtsmittleren Molmassen von 100 bis 5000 g/mol als Startverbindungen verwendet. Besonders geeignet sind Polypropylenglykole, Polyethylenglykole, Poly(ethylen)-co-(propylen)glykole, Polybutylenglykole, Poly(propylen)-co-(butylen)glykole, Poly(butylen)-co-(ethylen)glykole, die eine OH-Gruppe haben. Unter diesen Polyalkylenglykolen sind insbesondere solche Verbindungen vorteilhaft, die sich von Allylalkohol, 1-Hexenol, Methallylalkohol, Vinylalkohol und Vinyloxybutanol ableiten.

Die Inhalte des Buches "Chemie und Technologie der Silicone", Verlag Chemie, 1960, der DE-B-26 46 726, der EP-A-0 075 703, der WO 98/00463, der US-A-3 516 946, der US-A-3 814 730, der US-A-3 775 452, der US-A-4 288 345, der EP-A-1 520 870 werden hiermit als Referenz eingeführt und gelten als Teil des Offenbarungsgehaltes der vorliegenden Erfindung.

Erfindungsgemäß wird die Hydrosilylierung in Gegenwart eines Edelmetallkatalysators durchgeführt. Dabei können beispielsweise Katalysatoren eingesetzt werden wie Platin-, Rhodium-, Osmium-, Ruthenium-, Palladium-, Iridium-Komplexe oder ähnliche Verbindungen bzw. die entsprechenden reinen Elemente oder deren auf Silica, Aluminiumoxid oder Aktivkohle oder ähnlichen Trägermaterialien immobilisierten Derivate. Bevorzugt wird die Hydrosilylierung mit Hilfe von Platinkomplexen wie cis-(NH₃)₂PtCl₂-(Cis-Platin), Di-D-[chloro-bis chloro(cyclohexen)platin(II)] oder vorzugsweise mit Komplexen des nullwertigen Platins wie zum Beispiel [Tris(divinyltetramethyldisiloxan)bis-platin(0)] (Karstedt-Katalysator) und besonders bevorzugt mit Lösungen Olefin-aktivierter Platin(0)-Komplexkatalysatoren (sog. WK-Katalysatoren) gemäß der Lehre der EP1520870 durchgeführt. Die Katalysatormenge wird hierbei so bemessen, dass die Gesamtkonzentration an Platin 1 bis 100 wppm (Gewichts-ppm), vorzugsweise 2 bis 10 wppm bezogen auf das gesamte Reaktionsgemisch beträgt.

Für den Fachmann ersichtlich, wird die minimale Platinkonzentration vorzugsweise so gewählt, dass sie eine sicher-zügige SiC-Verknüpfungsreaktion gestattet, ohne die Wirtschaftlichkeit des Verfahrens durch zu hohen Edelmetalleinsatz zu beinträchtigen oder darüber hinaus auch noch nachteilige Produktverfärbungen hervorzurufen.

Die Hydrosilylierung kann bei Temperaturen zwischen 0 und 200 °C, bevorzugt zwischen 50 und 140 °C, durchgeführt werden.

Die Katalysatoren können über einen weiten Temperaturbereich eingesetzt werden. Zur Vermeidung von Nebenreaktionen wird vorzugsweise der Temperaturbereich so niedrig gewählt, dass er einen akzeptablen Kompromiss zwischen angestrebter Produktreinheit und Produktionsleistung darstellt. Die erfindungsgemäß bevorzugten, Olefin-aktivierten Systeme katalysieren unter schwacher Exothermie zufriedenstellend bereits ab 50° C. Zur Erzielung höherer Durchsatzraten kann die Umsetzungstemperatur auch erheblich erhöht werden, ohne dass es zu Desaktivier- und Abschaltphänomenen kommt.

Geeignete Verfahren zur Hydrosilylierung werden zum Beispiel im Buch "Chemie und Technologie der Silicone", Verlag Chemie, 1960, Seite 43, sowie in US-A-3 775 452 und EP-A-1 520 870 beschrieben, auf welche ausdrücklich verwiesen wird.

Insbesondere wird in dem erfindungsgemäßen Verfahren darauf verzichtet, hochenergetische Dispergiermaschinen, wie insbesondere Kolloidmühlen, Homomischer, Inline-Mischer oder rotierende Scheiben-ausgerüstete Rotationsscheibenmischer, einzusetzen. Insbesondere wird das erfindungsgemäße Verfahren in Abwesenheit organischer Lösungsmittel durchgeführt, also insbesondere in Abwesenheit solcher Lösungsmittel wie Alkohole, wie z.B. Ethylalkohol und Isopropylalkohol sowie aromatischer Lösungsmittel wie z.B. Benzol, Toluol und Xylol. "Abwesenheit organischer Lösungsmittel" bedeutet im Sinne der vorliegenden Erfindung, dass weniger als 5 Gew.-%, bezogen auf die Gesamtmasse der Reaktanden, bevorzugt weniger als 2 Gew.-%, weiter bevorzugt weniger als 1 Gew.-%, insbesondere gar keine organische Lösungsmittel eingesetzt werden. Der Eintrag organischer Lösungsmittel ist für das erfindungsgemäße Verfahren nicht erforderlich, kann sich aber beispielsweise bei der Einbringung des Katalysators ergeben, z.B. bei Einsatz von Lösungen Olefin-aktivierter Platin(0)-Komplexkatalysatoren.

Erfindungsgemäß kann, falls im individuellen System gewünscht, die Zugabe des olefinisch ungesättigten Polyethers mit einem Edelmetallkatalysator und gegebenenfalls weiteren Additiven erfolgen. Diese Additive können zum Beispiel bei Einsatz olefinisch ungesättigter Polyether, die eine terminale Hydroxylgruppe tragen, dazu dienen, unbeabsichtigten Molmassenaufbau in der Hydrosilylierung durch Dehydrokondensation respektive Acetalbildung zu verhindern und sind unter anderem in der US 4 847 398 (Alkalimetallcarboxylate) oder beispielweise in der EP 0 550 064 (sterisch gehinderte Amine und Phosphine) beschrieben.

Das erfindungsgemäß beanspruchte Verfahren eignet sich zur Herstellung SiC-verknüpfter Polyethersiloxane, die verwendet werden können als Stabilisatoren für PUR-Schäume, Entschäumer, Lackadditive, Emulgatoren, insbesondere kosmetische Emulgatoren, kosmetische Conditioner, Entlüfter, Dismulgatoren, Textilausrüstungsmittel, Bautenschutzadditive, Kunststoffadditive, insbesondere Anti-Scratch-Additive, Antifouling-Additive bzw. -Beschichtungen und Anti-Icing-Mittel.

### Beispiele

Ohne die erfindungsgemäße Lehre zu beschränken, dienen nachfolgende Beispiele dem Fachmann zur Erläuterung des beanspruchten Verfahrens.

### Gasvolumetrische Bestimmung des SiH-Umsatzes:

Der zu einem bestimmten Zeitpunkt der Reaktion erzielte SiH-Umsatz wird gasvolumetrisch durch die Natriumbutylat induzierte Zersetzung einer der Reaktionsmatrix entnommenen, eingewogenen Probe an einer Gasbürette bestimmt. Das Volumen des dabei freigesetzten Wasserstoffs kennzeichnet den erzielten Reaktionsfortschritt. Zur detaillierten Beschreibung der Methodik der gasvolumetrischen SiH-Bestimmung sei auf C. Harzdorf, Z. Anal. Chem. 276, 279-283 (1975) verwiesen.

### Beispiel 1 (nichterfindungsgemäß)

In einem 250 ml Dreihalskolben, versehen mit Kontaktthermometer, KPG-Rührer und Rückflusskühler werden 30,8 g (75 mmol) eines Poly(methylhydrogen)polydimethylsiloxans mit einem gasvolumetrisch bestimmten SiH-Wert von 2,44 val/kg zusammen mit 87,4 g (101,5 mmol) eines Allylalkohol-gestarteten, Ethylenoxid-Propylenoxid basierten Polyethers (26 Gew.-% Propylenoxidanteil) mit einer lodzahl von 30,5 g/100 g vorgelegt und mittels einer Pilzheizhaube innerhalb von 7 Minuten unter Rühren (400 upm) auf 70°C erhitzt. Durch Zugabe von 5 wppm Platin in Form eines in Dekamethylcyclopentasiloxan gelösten, Ethylen-aktivierten Karstedt-Katalysators gemäß EP 1 520 870 B1 wird die Reaktion gestartet. Zur Umsatzkontrolle der exotherm einsetzenden Reaktion werden in den ersten 30 Minuten alle 3 Minuten Proben entnommen und in einem Zersetzungskölbchen eingewogen. Der jeweilige SiH-Umsatz wird dann volumetrisch durch Natriumbutylat induzierte Zersetzung der eingewogenen Proben an der Gasbürette bestimmt. Das Exothermiemaximum ist bereits nach 9 Minuten bei 90°C erreicht. Nach einer Stunde belegt die gasvolumetrische Bestimmung einen SiH-Umsatz von 80,6 % und nach 2,5 Stunden einen SiH-Umsatz von 99,6%.

### Beispiel 2 (nichterfindungsgemäß):

In einem 250 ml Dreihalskolben, versehen mit Kontaktthermometer, KPG-Rührer und Rückflusskühler werden 6,2 g (5 w% bezogen auf Gesamtansatz) des im Beispiel 1 hergestellten Polyethersiloxans zusammen mit 87,4 g (101,5 mmol) eines Allylalkohol-gestarteten, Ethylenoxid-Propylenoxid basierten Polyethers (26 Gew.-% Propylenoxidanteil) mit einer lodzahl von 30,5 g/100 g vorgelegt und mittels einer Pilzheizhaube innerhalb von 7 Minuten unter Rühren (400 upm) auf 70°C erhitzt. Durch die unmittelbare Zugabe von 30,8 g (75 mmol) eines Poly(methylhydrogen)-polydimethylsiloxans mit einem gasvolumetrisch bestimmten SiH-Wert von 2,44 val/kg zusammen mit 5 wppm Platin in Form eines in Dekamethylcyclopentasiloxan gelösten, Ethylen-aktivierten Karstedt-Katalysators gemäß EP 1 520 870 B1 wird die Reaktion gestartet. Zur Umsatzkontrolle der exotherm einsetzenden Reaktion werden in den ersten 30 Minuten alle 3 Minuten Proben entnommen und in einem Zersetzungskölbchen eingewogen. Der jeweilige SiH-Umsatz wird dann volumetrisch durch Natriumbutylat induzierte Zersetzung der eingewogenen Proben an der Gasbürette bestimmt. Zur Umsatzkontrolle wird in den ersten 30 Minuten alle 3 Minuten eine Probe genommen und der SiH-Umsatz gasvolumetrisch bestimmt. Mit 90°C ist das Exothermiemaximum nach 9 Minuten erreicht. Nach 1 Stunde belegt die gasvolumetrische Bestimmung einen SiH-Umsatz von 83,1 % und nach 2 Stunden einen SiH-Umsatz von 97,9%.

### Beispiel 3 (erfindungsgemäß):

In einem 250 ml Dreihalskolben, versehen mit Kontaktthermometer, KPG-Rührer und Rückflusskühler werden 6,2 g (5 w% bezogen auf Gesamtansatz) des im Beispiel 1 hergestellten Polyethersiloxans zusammen mit 30,8 g (75 mmol) eines Poly(methylhydrogen)polydimethylsiloxans mit einem gasvolumetrisch bestimmten SiH-Wert von 2,44 val/kg Wasserstoffsiloxans vorgelegt und mittels einer Pilzheizhaube innerhalb von 7 Minuten unter Rühren (400 upm) auf 70°C erhitzt. Durch die unmittelbare Zugabe von 87,4 g (101,5 mmol) eines Allylalkohol-gestarteten, Ethylenoxid-Propylenoxid basierten Polyethers (26 Gew.-% Propylenoxidanteil) mit einer mittleren Molmasse von 843 g/mol zusammen mit 5 wppm Platin in Form eines in Dekamethylcyclopentasiloxan gelösten, Ethylen-aktivierten Karstedt-Katalysators gemäß EP 1 520 870 B1 wird die Reaktion gestartet. Zur Umsatzkontrolle der exotherm einsetzenden Reaktion werden in den ersten 30 Minuten alle 3 Minuten Proben entnommen und in einem Zersetzungskölbchen eingewogen. Der jeweilige SiH-Umsatz wird dann volumetrisch durch Natriumbutylat induzierte Zersetzung der eingewogenen Proben an der Gasbürette bestimmt. Zur Umsatzkontrolle wird in den ersten 30 Minuten alle 3 Minuten eine Probe genommen und der SiH-Umsatz gasvolumetrisch bestimmt. Das Exothermiemaximum liegt nach 9 Minuten Reaktionszeit bei 97°C. Nach 1 Stunde belegt die gasvolumetrische Bestimmung einen SiH-Umsatz von 97,1 % und bereits nach 1,5 Stunden ist der Umsatz quantitativ.

Durch reaktionsbegleitende Probenahme wurde für die 3 Beispiele ein Umsatz-Zeitverhalten bestimmt, das in FIG. 1 dargestellt ist. Auf der Ordinate ist der gasvolumetrisch bestimmte SiH-Umsatz in Prozent und auf der Abszisse die Reaktionszeit in Minuten aufgetragen. Der das erfindungsgemäße Verfahren kennzeichnende Kurvenverlauf (Beispiel 3) belegt eindrucksvoll die mit dem Verfahren einhergehende Prozessverbesserung. Die im Rahmen der Messtoleranz nahezu identischen Kurvenverläufe der nichterfindungsgemäßen Beispiele 1 und 2 weisen in der exothermen Anfangsphase eine deutlich geringere Steigung auf als die Kurve des erfindungsgemäßen Verfahrens. So erreichen beispielsweise die nichterfindungsgemäßen Reaktionsansätze (Beispiele 1 und 2) nach einer Reaktionszeit von t = 20 Minuten etwa 50% des theoretischen SiH-Umsatzes, während der erfindungsgemäß durchgeführte Reaktionsansatz (Beispiel 3) bereits 78% des theoretischen SiH-Umsatzes aufweist.

Außerdem erreicht die das erfindungsgemäße Verfahren kennzeichnende Kurve früher den Endumsatz und belegt somit den erzielten Produktivitätsgewinn.

## Patentansprüche

1. Verfahren zur Herstellung SiC-verknüpfter Polyethersiloxane durch Edelmetall-katalysierte Anlagerung von olefinisch ungesättigten Polyethern an SiH-Gruppen aufweisende Siloxane, **dadurch gekennzeichnet, dass**
(i) man vor Reaktionsbeginn das SiH-Gruppen aufweisende Siloxan zusammen mit einem Polyethersiloxan vermischt, vorzugsweise unter Rühren, und dann
(ii) in einem zweiten Schritt diese Vormischung mit einem olefinisch ungesättigten Polyether sowie mit einem Edelmetallkatalysator und gegebenenfalls weiteren Additiven beaufschlagt, vorzugsweise unter weiterem Rühren,
und die SiC-Verknüpfungsreaktion bis zu einem gasvolumetrisch bestimmten SiH-Umsatz von mindestens 97% durchführt,
wobei in dem Verfahren weniger als 5 Gew.-%, bezogen auf die Gesamtmasse der Reaktanden, organische Lösungsmittel eingesetzt werden.

2. Verfahren nach Anspruch 1, **dadurch gekennzeichnet, dass** das mit dem SiH-Gruppen aufweisenden Siloxan zu vermischende Polyethersiloxan strukturell demjenigen Polyethersiloxan entspricht, das aus der SiC-verknüpfenden Anlagerung des olefinisch ungesättigten Polyethers an das SiH-Gruppen aufweisende Siloxan hervorgeht.

3. Verfahren nach Anspruch 1 oder 2, **dadurch gekennzeichnet, dass** man das mit dem SiH-Gruppen aufweisenden Siloxan zu vermischende Polyethersiloxan in Mengen von 5 bis 100 Massenprozent bezogen auf die Masse des SiH-Gruppen aufweisenden Siloxans plus der Masse des olefinisch ungesättigten Polyethers hinzugibt.

4. Verfahren nach einem der Ansprüche 1 bis 3, **dadurch gekennzeichnet, dass** das zur SiC-Verknüpfung eingesetzte, mindestens eine SiH-Gruppe tragende Siloxan einer der Formeln (I) bis (V) entspricht: 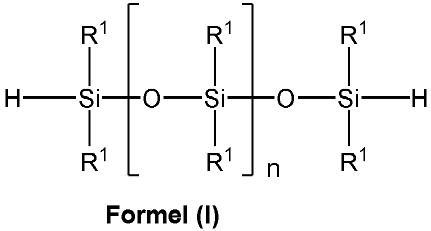
mit R¹, gleich oder verschieden: Alkyl- und/oder Aralkyl- und/oder aromatischer Rest, jeweils umfassend 1 bis 10 C-Atome,
und mit 1 ≤ n ≤ 250, 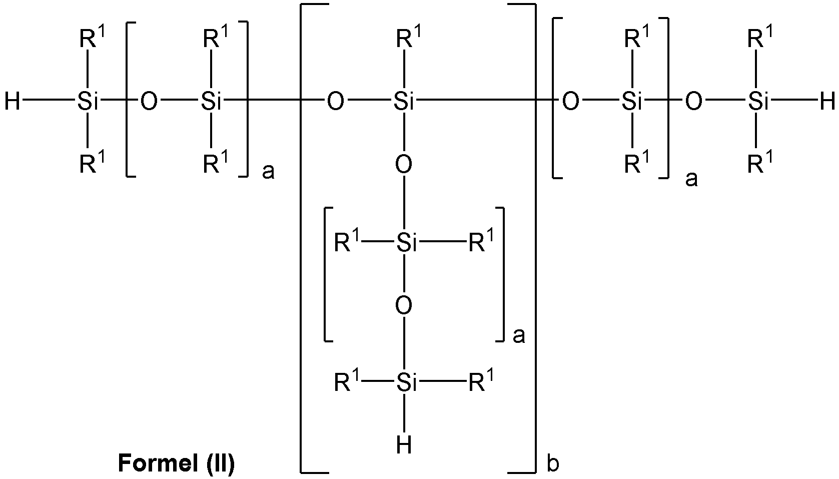
mit R¹, gleich oder verschieden: Alkyl- und/oder Aralkyl- und/oder aromatischer Rest, jeweils umfassend 1 bis 10 C-Atome
und mit a, gleich oder verschieden: 1 ≤ a ≤ 60 und
mit 0 < b ≤ 10, 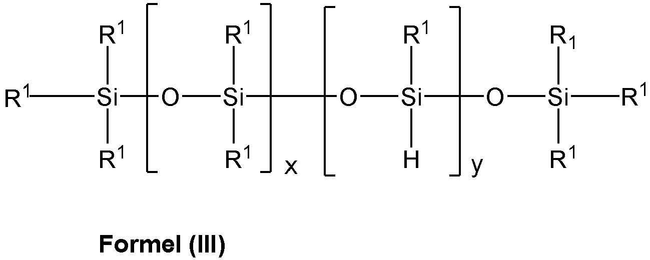
mit R¹, gleich oder verschieden: Alkyl- und/ oder Aralkyl- und / oder aromatischer Rest, jeweils umfassend 1 bis 10 C-Atome
mit 0 ≤ x ≤ 250 und
mit 1 ≤ y ≤ 50, 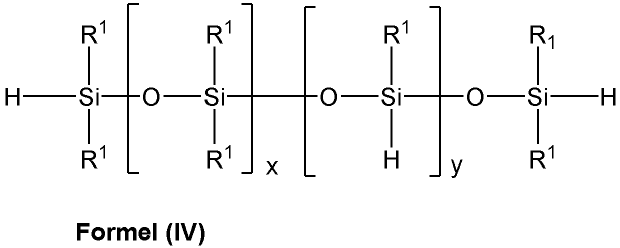
mit R¹, gleich oder verschieden: Alkyl- und/ oder Aralkyl- und / oder aromatischer Rest, jeweils umfassend 1 bis 10 C-Atome,
mit 0 ≤ x ≤ 250 und
1 ≤ y ≤ 50, 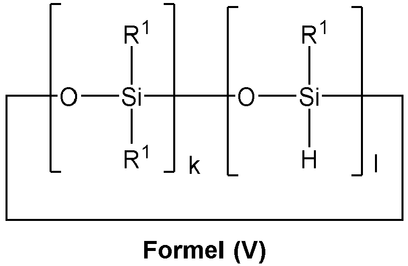
mit R¹, gleich oder verschieden: Alkyl- und/ oder Aralkyl- und / oder aromatischer Rest, jeweils umfassend 1 bis 10 C-Atome,
und mit 4 ≤ (k + I) ≤ 5 und
I ≥ 1.

5. Verfahren nach Anspruch 4, **dadurch gekennzeichnet, dass** der Rest R¹ für eine Methylgruppe steht.

6. Verfahren nach einem der Ansprüche 1 bis 5 , **dadurch gekennzeichnet, dass** der olefinisch ungesättigte Polyether der Formel (VI) entspricht:
A[-O-(CH₂-CHR-O-)ₘ-(CH₂-CH₂-O-)ₙ--(CH₂-CH(CH₃)-O-)ₒ-Z]ₐ (VI)
mit A einem olefinisch ungesättigten, mindestens zwei Kohlenstoffatome, bevorzugt mindestens drei Kohlenstoffatome aufweisenden organischen Rest einer organischen Startverbindung zur Bereitung des Polyethers und
R unabhängig voneinander eine gesättigte Alkylgruppe mit 2-18 C-Atomen ist oder ein aromatischer Rest, bevorzugt eine Ethylgruppe oder ein Phenylrest,
und
Z entweder Wasserstoff,
ein linearer oder verzweigter, gesättigter oder ungesättigter Kohlenwasserstoffrest mit 1-18 C-Atomen, bevorzugt eine Methyl-, Ethyl-, Propyl-, Butyl-, Vinyl-, Allyl oder Methallylgruppe ist, oder
der Rest einer organischen Säure der Formel -C(=O)-Z_{E}, wobei Z_{E} ein organischer Rest, bevorzugt ein linearer oder verzweigter, gesättigter oder ungesättigter Kohlenwasserstoffrest mit 1 bis 17 C-Atomen, bevorzugt eine Methylgruppe ist, oder ein aromatischer Kohlenwasserstoffrest mit 6 bis 20 C-Atomen, bevorzugt ein Phenylrest ist, oder
der Rest der Formel -C(=O)-O-Z_{C} ist, wobei Zc ein organischer Rest, bevorzugt ein linearer oder verzweigter, gesättigter oder ungesättigter Kohlenwasserstoffrest mit 1 bis 18 C-Atomen, bevorzugt eine Methyl-, Ethylgruppe ist, oder ein aromatischer Kohlenwasserstoffrest mit 6 bis 20 C-Atomen, bevorzugt ein Phenylrest,
m gleich 0 bis zu 50, bevorzugt 0 bis zu 30, besonders bevorzugt 0 bis zu 20 ist,
n gleich 0 bis zu 250, bevorzugt 3 bis zu 220, besonders bevorzugt 5 bis zu 200 ist,
o gleich 0 bis zu 250, bevorzugt 3 bis zu 220, besonders bevorzugt 5 bis zu 200 ist,
a gleich 1 bis zu 8, bevorzugt größer 1 bis zu 6, besonders bevorzugt 1, 2, 3 oder 4,
mit der Maßgabe, dass die Summe aus m, n und o gleich oder größer als 1 ist.

7. Verfahren nach einem der Ansprüche 1 bis 6, **dadurch gekennzeichnet, dass** es in Gegenwart eines Edelmetall-Katalysators, ausgewählt aus Platin-, Rhodium-, Osmium-, Ruthenium-, Palladium-, Iridium-Komplexen oder deren auf Trägermaterialien wie Silica, Aluminiumoxid oder Aktivkohle immobilisierten Derivaten sowie deren Lösungen und/ oder deren Zubereitungen durchgeführt wird.

8. Verfahren nach einem der Ansprüche 1 bis 7, **dadurch gekennzeichnet, dass** es in Gegenwart eines Edelmetall-Katalysators, ausgewählt aus Komplexen des nullwertigen Platins und/ oder deren Lösungen und/ oder deren Zubereitungen durchgeführt wird.

9. Verfahren nach einem der Ansprüche 1 bis 8, **dadurch gekennzeichnet, dass** die Menge des eingesetzten Edelmetall-Katalysators 1 bis 100 Gewichts-ppm, bevorzugt 2 bis 10 Gewichts-ppm bezogen auf die Masse des SiH-Gruppen aufweisenden Siloxans plus der Masse des olefinisch ungesättigten Polyethers beträgt.

10. Verfahren nach einem der Ansprüche 1 bis 9, **dadurch gekennzeichnet, dass** die Edelmetall-katalysierte Anlagerung der olefinisch ungesättigten Polyether an SiH-Gruppen aufweisende Siloxane bei Temperaturen zwischen 0°C und 200°C, bevorzugt zwischen 50°C und 140°C vorgenommen wird.

## Claims

1. Process for preparing SiC-bonded polyethersiloxanes by precious metal-catalysed addition of olefinically unsaturated polyethers onto siloxanes having SiH groups, **characterized in that**
(i) prior to commencement of reaction, the siloxane having SiH groups is mixed together with a polyethersiloxane, preferably by stirring, and then
(ii) in a second step, this preliminary mixture is contacted with an olefinically unsaturated polyether and with a precious metal catalyst and optionally further additives, preferably with further stirring,
and the SiC bond formation reaction is conducted up to an SiH conversion, determined by gas-volumetric means, of at least 97%, wherein less than 5% by weight, based on the total mass of reactants, of organic solvents are used in the process.

2. Process according to Claim 1, **characterized in that** the polyethersiloxane to be mixed with the siloxane having SiH groups corresponds in structural terms to that polyethersiloxane that originates from the SiC bond-forming addition of the olefinically unsaturated polyether onto the siloxane having SiH groups.

3. Process according to Claim 1 or 2, **characterized in that** the polyethersiloxane to be mixed with the siloxane having SiH groups is added in amounts of 5 to 100 per cent by mass, based on the mass of the siloxane having SiH groups plus the mass of the olefinically unsaturated polyether.

4. Process according to any of Claims 1 to 3, **characterized in that** the at least one siloxane bearing SiH groups which is used for SiC bond formation conforms to one of the formulae (I) to (V): 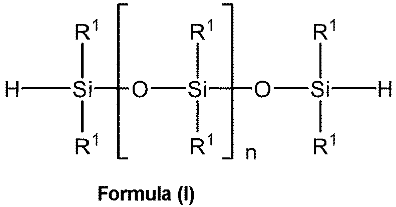
with R¹, identically or differently: alkyl and/or aralkyl and/or aromatic radical, each comprising 1 to 10 carbon atoms,
and with 1 ≤ n ≤ 250, 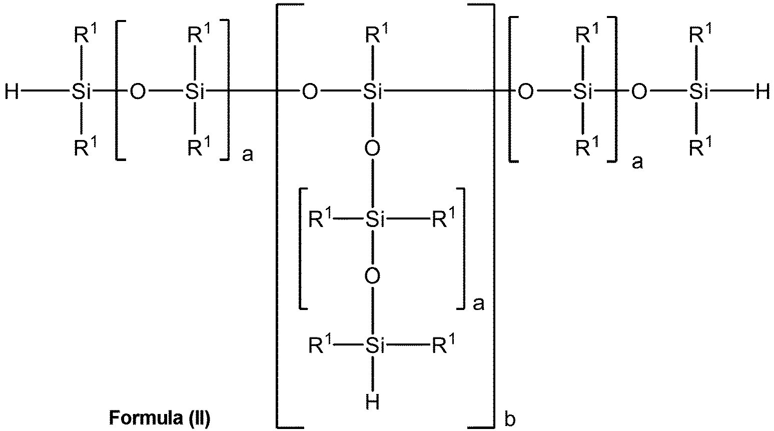
with R¹, identically or differently: alkyl and/or aralkyl and/or aromatic radical, each comprising 1 to 10 carbon atoms
and with a, identically or differently: 1 ≤ a ≤ 60 and with 0 < b ≤ 10, 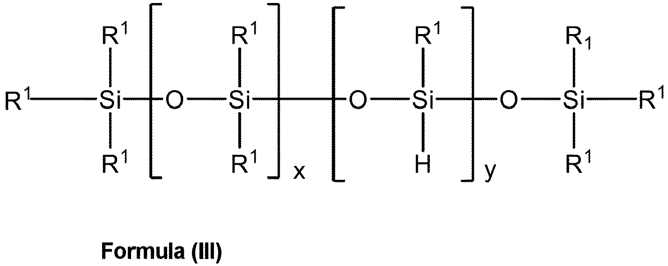
with R¹, identically or differently: alkyl and/or aralkyl and/or aromatic radical, each comprising 1 to 10 carbon atoms
with 0 ≤ x ≤ 250 and
with 1 ≤ y ≤ 50, 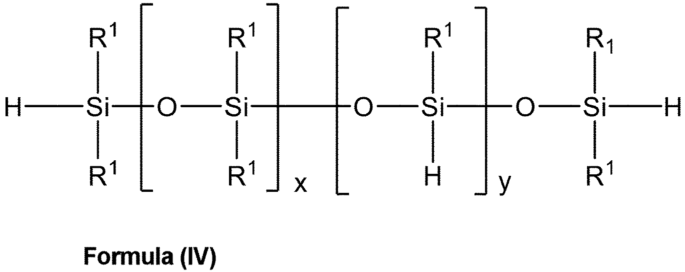
with R¹, identically or differently: alkyl and/or aralkyl and/or aromatic radical, each comprising 1 to 10 carbon atoms,
with 0 ≤ x ≤ 250 and
1 ≤ y ≤ 50, 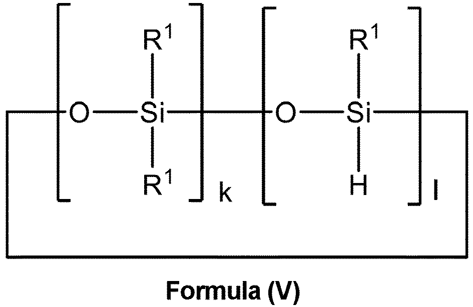
with R¹, identically or differently: alkyl and/or aralkyl and/or aromatic radical, each comprising 1 to 10 carbon atoms,
and with 4 ≤ (k + 1) ≤ 5 and
1 ≥ 1.

5. Process according to Claim 4, **characterized in that** the R¹ radical is a methyl group.

6. Process according to any of Claims 1 to 5, **characterized in that** the olefinically unsaturated polyether conforms to the formula (VI):
A[-O-(CH₂-CHR-O-)ₘ-(CH₂-CH₂-O-)ₙ--(CH₂-CH(CH₃)-O-)ₒ-Z]ₐ (VI)
with A an olefinically unsaturated organic radical having at least two carbon atoms, preferably at least three carbon atoms, of an organic starter compound for provision of the polyether and
R independently a saturated alkyl group having 2-18 carbon atoms or an aromatic radical, preferably an ethyl group or a phenyl radical,
and
Z either hydrogen,
a linear or branched, saturated or unsaturated hydrocarbyl radical having 1-18 carbon atoms, preferably a methyl, ethyl, propyl, butyl, vinyl, allyl or methallyl group, or
the radical of an organic acid of the formula -C(=O)-Z_{E} where Z_{E} is an organic radical, preferably a linear or branched, saturated or unsaturated hydrocarbyl radical having 1 to 17 carbon atoms, preferably a methyl group, or an aromatic hydrocarbyl radical having 6 to 20 carbon atoms, preferably a phenyl radical, or
the radical of the formula -C(=O)-O-Z_{C} where Z_{C} is an organic radical, preferably a linear or branched, saturated or unsaturated hydrocarbyl radical having 1 to 18 carbon atoms, preferably a methyl or ethyl group, or an aromatic hydrocarbyl radical having 6 to 20 carbon atoms, preferably a phenyl radical,
m 0 up to 50, preferably 0 up to 30, more preferably 0 up to 20,
n 0 up to 250, preferably 3 up to 220, more preferably 5 up to 200,
o 0 up to 250, preferably 3 up to 220, more preferably 5 up to 200,
a 1 up to 8, preferably greater than 1 up to 6, more preferably 1, 2, 3 or 4,
with the proviso that the sum total of m, n and o is not less than 1.

7. Process according to any of Claims 1 to 6, **characterized in that** it is conducted in the presence of a precious metal catalyst selected from platinum complexes, rhodium complexes, osmium complexes, ruthenium complexes, palladium complexes, iridium complexes or the derivatives thereof that have been immobilized on support materials such as silica, alumina or activated carbon, and solutions thereof and/or formulations thereof.

8. Process according to any of Claims 1 to 7, **characterized in that** it is conducted in the presence of a precious metal catalyst selected from complexes of zero-valent platinum and/or solutions thereof and/or formulations thereof.

9. Process according to any of Claims 1 to 8, **characterized in that** the amount of the precious metal catalyst used is 1 to 100 ppm by weight, preferably 2 to 10 ppm by weight, based on the mass of the siloxane having SiH groups plus the mass of the olefinically unsaturated polyether.

10. Process according to any of Claims 1 to 9, **characterized in that** the precious metal-catalysed addition of the olefinically unsaturated polyethers onto siloxanes having SiH groups is undertaken at temperatures between 0°C and 200°C, preferably between 50°C and 140°C.

## Revendications

1. Procédé de fabrication de polyéther-siloxanes reliés à SiC par addition catalysée par un métal noble de polyéthers oléfiniquement insaturés sur des siloxanes comprenant des groupes SiH, **caractérisé en ce que**
(i) avant le début de la réaction, le siloxane comprenant des groupes SiH est mélangé avec un polyéther-siloxane, de préférence sous agitation, puis
(ii) lors d'une deuxième étape, ce prémélange est chargé avec un polyéther oléfiniquement insaturé, ainsi qu'avec un catalyseur métal noble et éventuellement des additifs supplémentaires, de préférence sous agitation supplémentaire,
et la réaction de liaison à SiC est réalisée jusqu'à une conversion de SiH déterminée par volumétrie gazeuse d'au moins 97 %,
moins de 5 % en poids, par rapport à la masse totale des réactifs, de solvants organiques étant utilisés dans le procédé.

2. Procédé selon la revendication 1, **caractérisé en ce que** le polyéther-siloxane à mélanger avec le siloxane comprenant des groupes SiH correspond structuralement au polyéther-siloxane qui provient de l'addition de liaison à SiC du polyéther oléfiniquement insaturé sur le siloxane comprenant des groupes SiH.

3. Procédé selon la revendication 1 ou 2, **caractérisé en ce que** le polyéther-siloxane à mélanger avec le siloxane comprenant des groupes SiH est ajouté en quantités de 5 à 100 pour cent en masse par rapport à la masse du siloxane comprenant des groupes SiH plus la masse du polyéther oléfiniquement insaturé.

4. Procédé selon l'une quelconque des revendications 1 à 3, **caractérisé en ce que** le siloxane portant au moins un groupe SiH utilisé pour la liaison à SiC correspond à une des formules (I) à (V) : 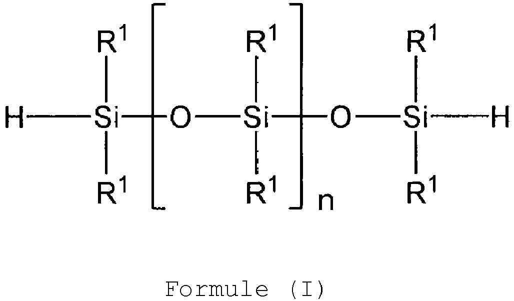
dans laquelle les R¹ représentent, de manière identique ou différente : un radical alkyle et/ou aralkyle et/ou aromatique, comprenant à chaque fois 1 à 10 atomes C,
et dans laquelle 1 ≤ n ≤ 250, 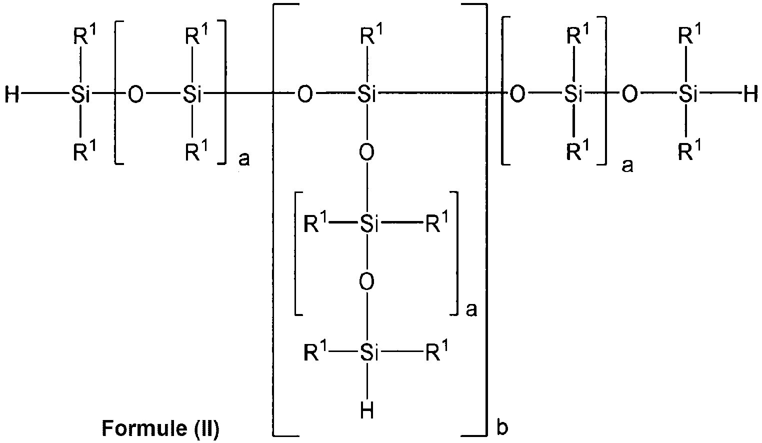
dans laquelle les R¹ représentent, de manière identique ou différente : un radical alkyle et/ou aralkyle et/ou aromatique, comprenant à chaque fois 1 à 10 atomes C,
et dans laquelle les a sont, de manière identique ou différente, tels que : 1 ≤ a ≤ 60 et
dans laquelle 0 < b ≤ 10, 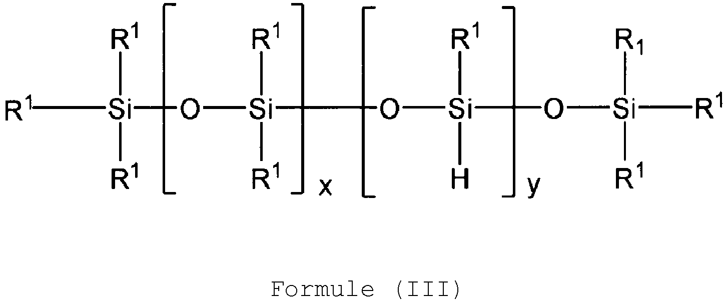
dans laquelle les R¹ représentent, de manière identique ou différente : un radical alkyle et/ou aralkyle et/ou aromatique, comprenant à chaque fois 1 à 10 atomes C,
dans laquelle 0 ≤ x ≤ 250 et
dans laquelle 1 ≤ y ≤ 50, 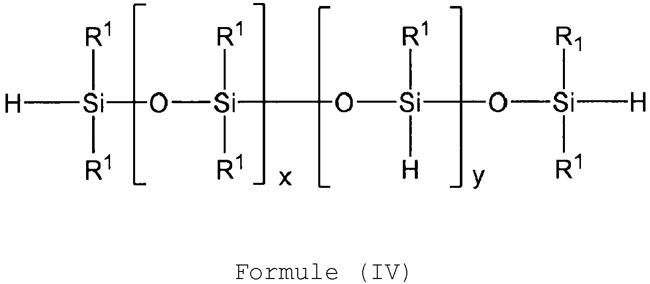
dans laquelle les R¹ représentent, de manière identique ou différente : un radical alkyle et/ou aralkyle et/ou aromatique, comprenant à chaque fois 1 à 10 atomes C,
dans laquelle 0 ≤ x ≤ 250 et
1 ≤ y ≤ 50, 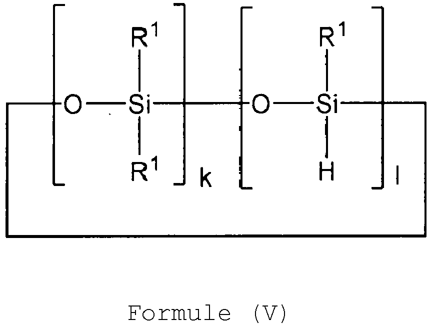
dans laquelle les R¹ représentent, de manière identique ou différente : un radical alkyle et/ou aralkyle et/ou aromatique, comprenant à chaque fois 1 à 10 atomes C,
et dans laquelle 4 ≤ (k+l) ≤ 5 et
l ≥ 1.

5. Procédé selon la revendication 4, **caractérisé en ce que** le radical R¹ représente un groupe méthyle.

6. Procédé selon l'une quelconque des revendications 1 à 5, **caractérisé en ce que** le polyéther oléfiniquement insaturé correspond à la formule (VI) :
**A[-O-(CH₂-CHR-O-)ₘ-(CH₂-CH₂-O-)ₙ--(CH₂-CH(CH₃)-O-)ₒ-Z]ₐ** (VI)
dans laquelle A représente un radical organique oléfiniquement insaturé, comprenant au moins deux atomes de carbone, de préférence au moins trois atomes de carbone, d'un composé de départ organique pour la préparation du polyéther, et
les R représentent indépendamment les uns des autres un groupe alkyle saturé de 2 à 18 atomes C ou un radical aromatique, de préférence un groupe éthyle ou un radical phényle,
et
Z représente l'hydrogène,
un radical hydrocarboné linéaire ou ramifié, saturé ou insaturé, de 1 à 18 atomes C, de préférence un groupe méthyle, éthyle, propyle, butyle, vinyle, allyle ou méthallyle, ou
le radical d'un acide organique de la formule -C(=O)-Z_{E}, Z_{E} étant un radical organique, de préférence un radical hydrocarboné linéaire ou ramifié, saturé ou insaturé, de 1 à 17 atomes C, de préférence un groupe méthyle, ou un radical hydrocarboné aromatique de 6 à 20 atomes C, de préférence un radical phényle, ou
le radical de la formule -C(=O)-O-Z_{C}, Z_{C} étant un radical organique, de préférence un radical hydrocarboné linéaire ou ramifié, saturé ou insaturé, de 1 à 18 atomes C, de préférence un groupe méthyle, éthyle, ou un radical hydrocarboné aromatique de 6 à 20 atomes C, de préférence un radical phényle,
m représente 0 à 50, de préférence 0 à 30, de manière particulièrement préférée 0 à 20,
n représente 0 à 250, de préférence 3 à 220, de manière particulièrement préférée 5 à 200,
o représente 0 à 250, de préférence 3 à 220, de manière particulièrement préférée 5 à 200,
a représente 1 à 8, de préférence plus de 1 à 6, de manière particulièrement préférée 1, 2, 3 ou 4,
à condition que la somme de m, n et o soit supérieure ou égale à 1.

7. Procédé selon l'une quelconque des revendications 1 à 6, **caractérisé en ce qu'**il est réalisé en présence d'un catalyseur métal noble, choisi parmi les complexes de platine, de rhodium, d'osmium, de ruthénium, de palladium, d'iridium, ou leurs dérivés immobilisés sur des matériaux supports tels que de la silice, de l'oxyde d'aluminium ou du charbon actif, ainsi que leurs solutions et/ou leurs préparations.

8. Procédé selon l'une quelconque des revendications 1 à 7, **caractérisé en ce qu'**il est réalisé en présence d'un catalyseur métal noble, choisi parmi les complexes du platine de valence zéro et/ou leurs solutions et/ou leurs préparations.

9. Procédé selon l'une quelconque des revendications 1 à 8, **caractérisé en ce que** la quantité du catalyseur métal noble utilisé est de 1 à 100 ppm en poids, de préférence de 2 à 10 ppm en poids, par rapport à la masse du siloxane comprenant des groupes SiH plus la masse du polyéther oléfiniquement insaturé.

10. Procédé selon l'une quelconque des revendications 1 à 9, **caractérisé en ce que** l'addition catalysée par un métal noble du polyéther oléfiniquement insaturé sur des siloxanes comprenant des groupes SiH est réalisée à des températures comprises entre 0 °C et 200 °C, de préférence comprises entre 50 °C et 140 °C.
